# EUROPÄISCHE PATENTANMELDUNG

(11) **EP 2 336 100 A1**
(43) Veröffentlichungstag der Anmeldung: **22.06.2011**
(21) Anmeldenummer: 09178250.8
(22) Anmeldetag: 08.12.2009
(51) Int. Cl.: C04B 40/00

(54) **Zusatzmittel für mineralische Bindemittel mit verringertem Braunverfärbungspotential**

(71) Anmelder: Sika Technology AG, 6340 Baar (CH)
(72) Erfinder: HONERT, Dieter, 69234, Dielheim (DE); HELLER, Thomas, 69226, Nussloch (DE)
(74) Vertreter: Sika Patent Attorneys

(57) **Zusammenfassung**

Die vorliegende Erfindung betrifft eine Zusatzmittelzusammensetzung umfassend ein Mahlhilfsmittel ausgewählt aus der Gruppe bestehend aus Glykole, Monocarbonsäuren mit 1 bis 4 Kohlenstoffatomen und Kammpolymeren sowie mindestens einen Verzögerer, welche beim Mahlprozess von Zementklinker eingesetzt werden kann und zu einer geringen Braunverfärbung des gemahlenen Zementes im verarbeiteten Zustand führt.

## Beschreibung

### Technisches Gebiet

Die Erfindung betrifft das Gebiet der Zusatzmittel im Mahl- und Mischprozess von hydraulischen Bindemitteln und/oder latent hydraulischen Bindemitteln. Das erfindungsgemässe Zusatzmittel zeichnet sich durch eine exzellente Verzögerungswirkung bei hydraulisch abbindenden Zusammensetzungen, welche mit dem erfindungsgemässen Zusatzmittel gemahlen Klinker enthalten, aus.

### Stand der Technik

Ein zentraler Schritt in der Zementherstellung ist das Mahlen des Zementklinkers. Da Zementklinker sehr hart sind, ist das Zerkleinern sehr energieaufwändig. Für die Eigenschaften des Zementes ist es wichtig, dass er als feines Pulver vorliegt. Deshalb ist die Feinheit des Zementes ein wichtiges Qualitätsmerkmal. Um das Zerkleinern in Pulverform zu erleichtern werden sogenannte Zementmahlhilfsmittel eingesetzt. Dadurch werden die Mahlzeiten und Energiekosten stark reduziert.

Organische Amine mit einem Molekulargewicht M_{w} von kleiner als 500 g/mol, respektive deren Ammoniumsalze, sind sehr verbreitete Mahlhilfsmittel. Beispiele von solchen organischen Aminen sind Alkanolamine wie Trialkanolamine, Triisopropanolamin (TIPA) oder Triethanolamin (TEA). Sie haben jedoch den Nachteil, dass sie ab einer gewissen Menge den Versteifungsbeginn beschleunigen, bzw. die Zeitdifferenz zwischen Erstarrungssende und Erstarrungsbeginn verkürzen, also als Beschleuniger wirken.

Damit wässrige hydraulische Bindemittel länger verarbeitbar sind, werden Abbindeverzögerer, im Folgenden auch Verzögerer genannt, zugesetzt, um den Versteifungsbeginn hinauszuzögern, bzw. die Zeitdifferenz zwischen Erstarrungssende und Erstarrungsbeginn zu vergrössern. Die Zugabe dieser Verzögerer zu den hydraulischen Bindemitteln erfolgt typischerweise mit der Zugabe des Anmachwassers oder kurz danach.

Ein weiteres Problem von Mahlhilfsmitteln ist, dass sie die Entstehung von Braunverfärbungen von abgebundenen hydraulischen Bindemitteln fördern können. Über den Einfluss von Mahlhilfsmitteln auf die Entstehung von Braunverfärbungen liegen relativ wenig gesicherte Erkenntnisse vor (Verringerung des Braunverfärbungsrisikos von Betonwaren, Härdtl et al, BFT Betonwerk + Fertigteil-Technik, Nr.11, 2003, Seiten 34 - 46, Bauverlag).

### Darstellung der Erfindung

Der vorliegenden Erfindung lag daher die Aufgabe zugrunde, neue Zusatzmittelzusammensetzungen für den Mahl- und Mischprozess von hydraulischen Bindemitteln zur Verfügung zu stellen, welche die genannten Nachteile des Standes der Technik nicht aufweisen, insbesondere gute abbindeverzögernde Eigenschaften besitzen und nicht/kaum zur Förderung von Braunverfärbungen beitragen.

Überraschenderweise wurde nun gefunden, dass durch die erfindungsgemässe Zusatzmittelzusammensetzung **Z** die Nachteile der bekannten Mahlhilfsmittel aufgehoben, beziehungsweise stark reduziert, werden können, ohne dass die vorteilhaften Wirkungen der üblichen Zementmahlhilfsmittel verloren gehen.

Überraschenderweise hat sich weiter gezeigt, dass die Anwesenheit von Verzögerern in der Zusatzmittelzusammensetzung **Z** keinen negativen Einfluss auf die Effizienz des Mahlprozesses hat.

Weiter wurde überraschenderweise gefunden, dass die Zugabe von Zusatzmittelzusammensetzung **Z** keinen negativen Einfluss auf die Druckfestigkeit des abgebundenen mineralischen Bindemittels hat.

Überraschenderweise hat sich weiter gezeigt, dass der Verzögerer seine verzögernde Wirkung im Laufe des Mahlprozesses nicht verliert. Weiter kann, bedingt durch die im Laufe des Mahlprozesses erreichte feinere Verteilung des Verzögerers, im Vergleich zur Zugabe mit dem Anmachwasser, wesentlich weniger Verzögerer eingesetzt werden.

### Wege zur Ausführung der Erfindung

Die vorliegende Erfindung betrifft eine Zusatzmittelzusammensetzung **Z** umfassend mindestens ein Mahlhilfsmittel ausgewählt aus der Gruppe bestehend aus Glykole, Monocarbonsäuren mit 1 bis 4 Kohlenstoffatomen und Kammpolymere, sowie mindestens einen Verzögerer, wobei die Zusatzmittelzusammensetzung **Z** im Wesentlichen frei von organischen Aminen mit einem Molekulargewicht M_{w} von kleiner als 500 g/mol, respektive deren Ammoniumsalzen, ist.

Vorzugsweise beträgt der Gewichtsanteil an Mahlhilfsmittel 0.2 - 99.8 Gewichts-%, bezogen auf das Gewicht der Zusatzmittelzusammensetzung **Z.**

Unter dem Begriff "Kammpolymer" wird im vorliegenden Dokument ein Kammpolymer bestehend aus einer linearen Polymerkette (=Hauptkette), an welcher über Ester- oder Ethergruppen Seitenketten angebunden sind, verstanden. Die Seitenketten bilden hierbei bildlich gesprochen die "Zähne" eines "Kamms".

Bevorzugt handelt es sich bei dem Kammpolymer um ein Kammpolymer **KP** mit über Ester- oder Ethergruppen an die Hauptkette angebunden Seitenketten.

Als Kammpolymer **KP** geeignet sind einerseits Kammpolymere mit über Ethergruppen an das lineare Polymergerüst gebundenen Seitenketten.

Über Ethergruppen an das lineare Polymergerüst gebundene Seitenketten können durch Polymerisation von Vinylethern oder Allylethern eingeführt werden.

Derartige Kammpolymere sind beispielsweise in WO 2006/133933 A2 beschrieben, deren Inhalt hiermit insbesondere durch Bezugnahme eingeschlossen wird, offenbart sind. Die Vinylether oder Allylether weisen insbesondere die Formel (11) auf.

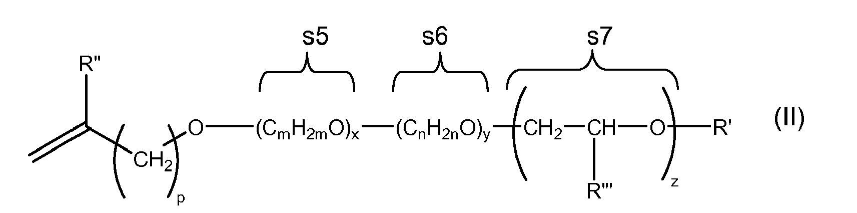

Hierbei steht R' für H oder für einen aliphatischen Kohlenwasserstoffrest mit 1 bis 20 C-Atomen oder einen cycloaliphatischen Kohlenwasserstoffrest mit 5 bis 8 C-Atomen oder ein, gegebenenfalls substituierter, Arylrest mit 6 bis 14 C-Atomen. R" steht für H oder für eine Methylgruppe und R'" steht für einen unsubstituierten oder substituierten Arylrest, insbesondere für einen Phenylrest.

Weiterhin stehen p für 0 oder 1; m und n unabhängig voneinander je für 2, 3 oder 4; und x und y und z unabhängig voneinander je für Werte aus dem Bereich von 0 bis 350.

Die Abfolge der in Formel (ll) als s5, s6 und s7 bezeichneten Teilstrukturelemente kann hierbei alternierend, blockartig oder zufällig angeordnet sein.

Insbesondere sind derartige Kammpolymere Copolymerisate von Vinylether oder Allylether mit Maleinsäureanhydrid, Maleinsäure, und/oder (Meth)acrylsäure.

Als Kammpolymer **KP** geeignet sind andererseits Kammpolymere mit über Estergruppen an das lineare Polymergerüst gebundenen Seitenketten. Diese Art von Kammpolymeren **KP** ist gegenüber den Kammpolymeren mit über Ethergruppen an das lineare Polymergerüst gebundenen Seitenketten bevorzugt.

Besonders bevorzugte Kammpolymere **KP** sind Copolymere der Formel (l).

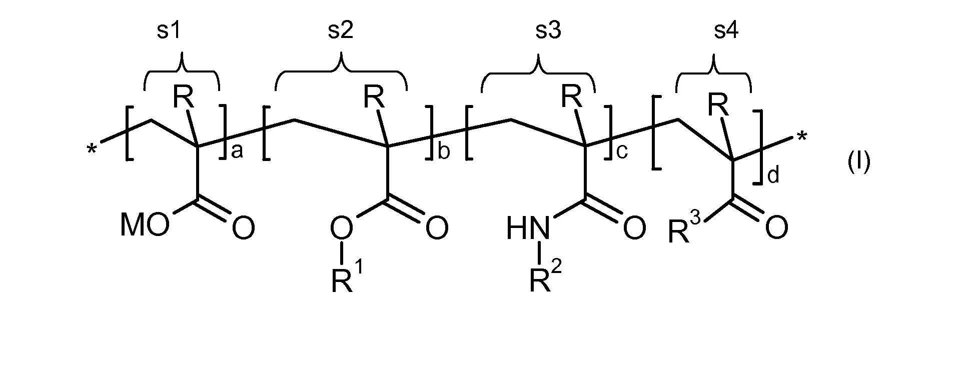

Hierbei stehen M unabhängig voneinander für H⁺, Alkalimetallion, Erdalkalimetallion, zwei- oder dreiwertiges Metallion, Ammoniumion, oder organische Ammoniumgruppe. Der Term ,,unabhängig voneinander" bedeutet im vorliegenden Dokument jeweils, dass ein Substituent unterschiedliche zur Verfügung stehenden Bedeutungen in demselben Molekül aufweisen kann. So kann beispielsweise das Copolymer der Formel (l) gleichzeitig Carbonsäuregruppen und Natriumcarboxylatgruppen aufweisen, das heisst, dass für M in diesem Falle H⁺ und Na⁺ unabhängig voneinander bedeuten.

Dem Fachmann ist klar, dass es sich einerseits um ein Carboxylat handelt, an welches das Ion M gebunden ist, und dass andererseits bei mehrwertigen lonen M die Ladung durch Gegenionen ausgeglichen sein muss.

Weiterhin stehen die Substituenten R unabhängig voneinander für Wasserstoff oder für eine Methylgruppe.

Des Weiteren stehen die Substituenten R¹ unabhängig voneinander für -[AO]q-R⁴. Die Substituenten R² stehen unabhängig voneinander für eine C₁-bis C₂₀-Alkylgruppe, -Cycloalkylgruppe, -Alkylarylgruppe oder für -[AO]q-R⁴. Der Substituent A steht in beiden Fälle unabhängig voneinander für eine C₂-bis C₄-Alkylengruppe und R⁴ für eine C₁- bis C₂₀-Alkylgruppe, -Cyclohexylgruppe oder -Alkylarylgruppe, während q einen Wert von 2 bis 250, insbesondere von 8 bis 200, besonders bevorzugt von 11 bis 150, darstellt.

Des Weiteren stehen die Substituenten R³ unabhängig voneinander für -NH₂, -NR⁵R⁶, -OR⁷NR 8^{R}9. Hierbei stehen R⁵ und R⁶ unabhängig voneinander für eine C₁- bis C₂₀-Alkylgruppe, -Cycloalkylgruppe oder -Alkylarylgruppe oder -Arylgruppe oder für eine Hydroxyalkylgruppe oder für eine Acetoxyethyl-(CH₃-CO-O-CH₂-CH₂-) oder eine Hydroxy-isopropyl- (HO-CH(CH₃)-CH₂-) oder eine Acetoxyisopropylgruppe (CH₃-CO-O-CH(CH₃)-CH₂-), oder R⁵ und R⁶ bilden zusammen einen Ring, von dem der Stickstoff ein Teil ist, um einen Morpholin- oder lmidazolinring aufzubauen.

Weiterhin stehen die Substituenten R⁸ und R⁹ je unabhängig voneinander für eine C₁- bis C₂₀-Alkylgruppe, -Cycloalkylgruppe, -Alkylarygruppe, -Arylgruppe oder für eine Hydroxyalkylgruppe.

Die Abfolge der in Formel (l) als s1, s2, s3 und s4 bezeichneten Teilstrukturelemente kann hierbei alternierend, blockartig oder zufällig angeordnet sein.

Schliesslich stellen die Indizes a, b, c und d Molverhältnisse der Struktureinheiten s1, s2, s3 und s4 dar. Diese Strukturelemente stehen in einem Verhältnis von
a/b/c/d = (0.1 - 0.9) / (0.1 - 0.9) / (0 - 0.8) / (0 - 0.3), insbesondere a/b/c/d = (0.1 - 0.9) / (0.1 - 0.9) / (0 - 0.5) / (0 - 0.1),
bevorzugt a/b/c/d = (0.1 - 0.9) / (0.1 - 0.9) / (0 - 0.3) / (0 - 0.06), zueinander, mit der Massgabe, dass a + b + c + d = 1 ist. Die Summe c + d ist bevorzugt grösser als 0.

Die Herstellung des Kammpolymeren **KP** der Formel (l) kann einerseits durch radikalische Polymerisation der entsprechenden Monomere der Formel (IIIₐ), (III_{b}), (III_{C},) bzw. (III_{d}), welche dann zu den Strukturelementen Struktureinheiten s1, s2, s3 und s4 führen, 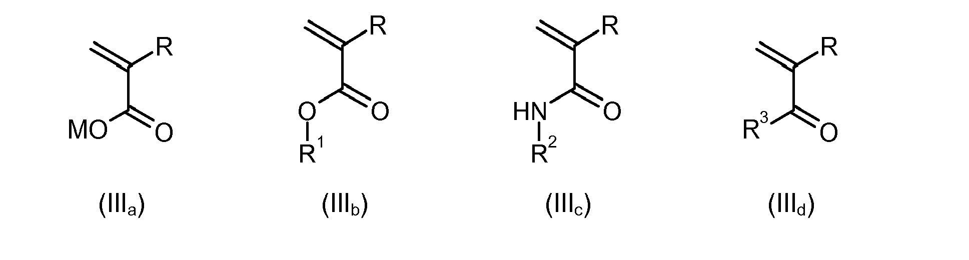 oder andererseits durch eine sogenannte polymer-analoge Umsetzung einer Polycarbonsäure der Formel (IV) erfolgen

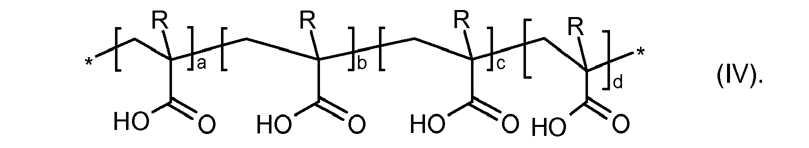

In der polymer-analogen Umsetzung wird die Polycarbonsäure der Formel (IV) mit den korrespondierenden Alkoholen, Aminen verestert oder amidiert und dann allenfalls neutralisiert oder teilneutralisiert (je nach Art des Rest M z.B. mit Metallhydroxiden oder Ammoniak).

Details zur polymer-analogen Umsetzung sind offenbart beispielsweise in US 2002/0002218 A1 auf Seite 5 in Abschnitt [0077] bis und mit [0083], sowie in dessen Beispielen oder in US 6,387,176 B1 auf Seite 5, Zeile 18 bis Zeile 58 sowie in dessen den Beispielen. In einer Abart davon, wie sie in US 2006/0004148 A1 auf Seite 1 in Abschnitt [0011] bis und mit [0055] auf Seite 3 sowie in dessen Beispielen beschrieben sind, kann das Kammpolymer **KP** der Formel (l) in festem Aggregatszustand hergestellt werden. Die Offenbarung dieser gerade genannten Patentschriften wird hiermit insbesondere durch Bezugnahme eingeschlossen.

Es hat sich erwiesen, dass eine besonders bevorzugte Ausführungsform der Kammpolymere **KP** der Formel (I) diejenigen sind, in welchen c+d 0, insbesondere d > 0, sind. Als Rest R³ hat sich insbesondere -NH-CH₂-CH₂-OH als besonderes vorteilhaft erwiesen.

Als besonders vorteilhaft erwiesen haben sich Kammpolymere **KP**, wie sie von Sika Schweiz AG unter der Handelsnamenreihe ViscoCrete® kommerziell vertrieben werden.

Handelt es sich bei dem Mahlhilfsmittel um Kammpolymere, beträgt der Gewichtsanteil typischerweise 0.2 - 40 Gewichts-%, vorzugsweise 5 - 35, insbesondere bevorzugt 15 - 35 Gewichts-%, bezogen auf das Gewicht der Zusatzmittelzusammensetzung **Z**.

Als Glykole sind insbesondere Alkylenglykole geeignet, vor allem der Formel OH-(CH₂-CH₂O)ᵤ-CH₂CH₂-OH mit u = 0 - 20, insbesondere 0, 1, 2 oder 3.

Als mögliche Glykole sind Glykole geeignet, welche ausgewählt sind aus der Liste bestehend aus Ethylenglykol, Propylenglykol, Polyethylenglykol, Polypropylenglykol, Diethylenglykol, Triethylenglykol, Dipropylenglykol, Tripropylenglykol, Reaktionsprodukte aus Ethylen- und Propylenoxid, Reaktionsprodukte aus Polypropylenglykol mit Verbindungen mit aktivem basischem Wasserstoff (Polyalkohole, Polycarbonsäuren, Polyamine, oder Polyphenole), Neopentylglykol, Pentandiol, Butandiol und ungesättigte Diole, sowie Mischungen davon und deren Derivate.

Besonders bevorzugte Glykole sind Mono-, Di- und Polyglykole aus Ethylen und Propylen, sowie Mischungen davon, denn sie sind kostengünstig und gut wasserlöslich. Insbesondere bevorzugt sind Diglykole, besonders Diethylenglykol.

Handelt es sich bei dem Mahlhilfsmittel um Glykole, beträgt der Gewichtsanteil typischerweise 0.2 - 99.8 Gewichts-%, bevorzugt 5 - 50 Gewichts-%, insbesondere bevorzugt 15 - 30 Gewichts-%, bezogen auf das Gewicht der Zusatzmittelzusammensetzung **Z.**

Als Monocarbonsäuren mit 1 bis 4 Kohlenstoffatomen sind insbesondere Ameisensäure, Essigsäure, Propionsäure und Butansäure geeignet, vor allem Essigsäure.

Handelt es sich bei dem Mahlhilfsmittel um Monocarbonsäuren mit 1 bis 4 Kohlenstoffatomen, beträgt der Gewichtsanteil typischerweise 0.2 - 15 Gewichts-%, bevorzugt 1 - 5 Gewichts-%, insbesondere bevorzugt 2 - 4 Gewichts-%, bezogen auf das Gewicht der Zusatzmittelzusammensetzung **Z.**

Nicht als Mahlhilfsmittel geeignet sind organische Amine mit einem Molekulargewicht M_{w} kleiner als 500 g/mol, wie Alkanolamine, vor allem Trialkanolamine wie Triisopropanolamin (TIPA) oder Triethanolamin (TEA) oder Ammoniumsalze von organischen Aminen. Diese haben den Nachteil, dass sie ab einer gewissen Menge den Versteifungsbeginn beschleunigen, beziehungsweise die Zeitdifferenz zwischen Erstarrungssende und Erstarrungsbeginn verkürzen, also als Beschleuniger wirken. Weiter wurde im Rahmen dieser Erfindung gefunden, dass diese Zementmahlhilfsmittel zu einer Braunverfärbung der abgebundenen hydraulischen Bindemittel führen.

Die Zusatzmittelzusammensetzung **Z** ist im Wesentlichen frei von erwähnten organischen Aminen mit einem Molekulargewicht M_{w} von kleiner als 500 g/mol, respektive deren Ammoniumsalzen. Unter dem Ausdruck ,,im Wesentlichen frei" wird im vorliegenden Dokument verstanden, dass der Anteil von organischen Aminen mit einem Molekulargewicht M_{w} von kleiner als 500 g/mol, respektive deren Ammoniumsalzen, 0 - 2 Gewichts-%, bevorzugt 0 - 0.1 Gewichts-%, bezogen auf das Gewicht der Zusatzmittelzusammensetzung Z, beträgt. Vorzugsweise ist der Anteil von erwähnten organischen Aminen so gering, dass kein beschleunigender Effekt und/oder Braunverfärbung der abgebundenen hydraulischen Bindemittel feststellbar sind, insbesondere bevorzugt ist die Zusatzmittelzusammensetzung **Z** frei von erwähnten organischen Aminen.

Die Zusatzmittelzusammensetzung **Z** umfasst mindestens einen Verzögerer.

Unter dem Begriff "Verzögerer" werden im vorliegenden Dokument Zusatzmittel verstanden, welche bei wässrigen mineralischen Bindemitteln enthaltend dieses Zusatzmittel den Erstarrungsbeginn hinausschieben bzw. die Zeitdifferenz zwischen Erstarrungssende und Erstarrungsbeginn erhöhen, im Vergleich zu wässrigen mineralischen Bindemitteln ohne Zugabe von diesem Zusatzmittel.

Geeignete Verzögerer sind beispielsweise Celluloseether, Casein und Dextrin oder anorganische Verbindungen wie Zink und Blei und vor allem Komplexbildner für Calcium und solche, die mit Calcium schwerlösliche Verbindungen bilden, zum Beispiel Phosphate, Phosphonate, Silikonfluoride, sowie Borsäure, Weinsäure, Gluconsäure, Heptonsäure, Zitronensäure, Gallussäure, Äpfelsäure und die Salze der erwähnten Säuren, Saccharose, Glucose, und Fructose.

Vorzugsweise ist der mindestens eine Verzögerer ausgewählt ist aus der Gruppe bestehend aus Celluloseether, Casein, Dextrin, Zink, Blei, Phosphate, Phosphonate, Silikonfluoride, Borsäure, Oxalsäure, Milchsäure, Succinsäure, Adipinsäure, Weinsäure, Gluconsäure, Heptonsäure, Zitronensäure, Gallussäure, Äpfelsäure, Saccharose, Glucose und Fructose, respektive der Salze der erwähnten Säuren.

Insbesondere bevorzugt ist der mindestens eine Verzögerer ausgewählt aus der Gruppe bestehend aus Borsäure, Gluconsäure, Saccharose, Glucose und Fructose, respektive der Salze der erwähnten Säuren.

Es ist von Vorteil, wenn der Gewichtsanteil an Verzögerer 0.2 ― 30 Gewichts-%, bezogen auf das Gewicht der Zusatzmittelzusammensetzung Z, beträgt. Falls es sich bei dem Verzögerer um Borsäure handelt, beträgt der Gewichtsanteil vorzugsweise 0.2 ― 10 Gewichts-%, im Falle von Saccharose, Glucose, Fructose oder Gluconat vorzugsweise 5 ― 30 Gewichts-%, bezogen auf das Gewicht der Zusatzmittelzusammensetzung **Z**.

Bei den mineralischen Bindemitteln handelt es sich um hydraulische Bindemittel und/oder latent hydraulische Bindemittel und/oder puzzolanische Bindemittel. Unter dem Begriff hydraulische Bindemittel werden im vorliegenden Dokument Bindemittel verstanden, die auch unter Wasser abbinden, respektive erhärten, wie beispielsweise hydraulischer Kalk oder Zement. Unter dem Begriff latent hydraulische Bindemittel werden im vorliegenden Dokument Bindemittel verstanden, die erst durch Einwirkung von Zusätzen (Anregern) abbinden, respektive erhärten, wie beispielsweise Hüttensand. Unter dem Begriff puzzolanische Bindemittel werden im vorliegenden Dokument Bindemittel verstanden, die nicht selbstständig abbinden sondern nach Feuchtlagerung durch Bindung von Calciumhydroxid festigkeitsbildende Reaktionsprodukte liefern, wie beispielsweise Flugasche, Silica fume, sowie natürliche Puzzolane, wie z. B. Trass.

Vorzugsweise handelt es sich bei dem hydraulischen Bindemittel um Zement.

Die Zusatzmittelzusammensetzung **Z** kann als schüttfähige Zusammensetzung vorliegen, beispielsweise als Pulver, oder als flüssige Zusammensetzung, beispielsweise als wässrige Zusammensetzung.

Die Zusatzmittelzusammensetzung **Z** kann weitere Bestandteile enthalten. Beispiels hierfür sind Lösungsmittel oder Additive, wie sie in der Betontechnologie geläufig sind, insbesondere oberflächenaktive Stoffe, Stabilisatoren gegen Hitze und Licht, Farbstoffe, Entschäumer, Korrosionsinhibitoren, Luftporenbilder.

Eine mögliche bevorzugte Zusatzmittelzusammensetzung **Z,** umfasst:
- Alkylenglykol, insbesondere Diethylenglykol, 15 ― 30 Gewichts- %, bezogen auf die Zusatzmittelzusammensetzung **Z;**
- Kammpolymer **KP** der Formel (l), 15 ― 35 Gewichts-%, bezogen auf die Zusatzmittelzusammensetzung **Z**;
- Essigsäure, 1 ― 5 Gewichts-%, bezogen auf die Zusatzmittelzusammensetzung **Z;**
- Gluconat, 10 ― 20 Gewichts-%, bezogen auf die Zusatzmittelzusammensetzung Z; oder Borsäure, 1 - 5, insbesondere 2 - 4 Gewichts-%, bezogen auf die Zusatzmittelzusammensetzung **Z.**
   Vorzugsweise weist die Zusatzmittelzusammensetzung **Z** ferner auf;
- Konservierungsmittel, 0.1 ― 0.4 Gewichts-%, bezogen auf die Zusatzmittelzusammensetzung **Z**;
- Entschäumer, 0.1 ― 0.4 Gewichts-%, bezogen auf die Zusatzmittelzusammensetzung **Z**.

In einem weiteren Aspekt betrifft die vorliegende Erfindung ein Verfahren zur Herstellung von mineralischen Bindemitteln umfassend den Schritt:
a) Zugabe einer Zusatzmittelzusammensetzung **Z** , wie sie vorgehend beschrieben wurde, vor und/oder während dem Mahlvorgang von Zementklinker, welcher im mineralischen Bindemittel enthalten ist.

Der Anteil an Zusatzmittelzusammensetzung **Z** beträgt dabei 0.005 - 0.5 Gew.-%, bevorzugt 0.01 - 0.2 Gewichts-%, insbesondere bevorzugt zwischen 0.025 - 0.1 Gewichts-%, bezogen auf den zu mahlenden Zementklinker.

Natürlich können die einzelnen Komponenten der Zusatzmittelzusammensetzung **Z**, insbesondere das mindestens eine Mahlhilfsmittel oder der mindestens eine Verzögerer, zeitlich getrennt voneinander vor und/oder während dem Mahlvorgang von Zementklinker zugegeben werden.

Unter dem Begriff "Zementklinker" werden im vorliegenden Dokument die, typischerweise etwa nussgroßen, Körper verstanden, die beim Erhitzen der Kalk-Ton-Gemische auf 1250-1500°C entstehen und beim Zermahlen Zement ergeben.

Es hat sich unter anderem gezeigt, dass bereits bedeutend kleinere Konzentrationen an Verzögerer in Bezug auf den Zementklinker wirkungsvoll zur Verzögerung des Abbindens von mineralischen Bindemitteln, umfassend mit Zusatzmittelzusammensetzung **Z** gemahlenen Zementklinker, eingesetzt werden können, als bekanntermassen, typischerweise mit dem Anmachwasser oder danach, als Verzögerer-Zusatzmittel dem mineralischen Bindemittel zugesetzt werden.

Der Mahlprozess erfolgt üblicherweise in einer Zementmühle. Es können aber grundsätzlich auch andere Mühlen, wie sie in der Zementindustrie bekannt sind, eingesetzt werden. Je nach Mahldauer verfügt der Zement über unterschiedliche Feinheit. Die Feinheit von Zement wird typischerweise nach Blaine in cm²/g angegeben. Andererseits ist für die Feinheit auch die Partikelgrössenverteilung von Praxisrelevanz. Solche Partikelgrössenanalysen werden üblicherweise durch Lasergranulometrie oder Luftstrahlsiebe ermittelt.

Der derart gemahlene Zement findet wie jeder anders gemahlene Zement eine breite Anwendung in Beton, Mörteln, Vergussmassen, Injektionen oder Putzen.

Wird Zusatzmittelzusammensetzung **Z** dem Zement vor und/oder während dem Mahlen des Zementklinkers zugeben, wird nach dessen Abmischung mit Wasser, das heisst im wässrigen mineralischen Bindemittel, insbesondere im Mörtel und Beton, eine Verzögerung des Abbindens des wässrigen mineralischen Bindemittel gegenüber mit herkömmlichen Mahlhilfmitteln gemahlenem Zement ersichtlich, insbesondere gegenüber mit organischen Aminen gemahlenem Zement. Ferner ist gegenüber Zement, welchem beim Mahlen des Zementklinkers organische Amine als Mahlhilfmittel zugegeben wurde, eine geringere Braunverfärbung ersichtlich.

Somit ist gemäss dieser Ausführungsform kein nachträgliches Zumischen von Verzögerer mehr nötig und spart deshalb einen Arbeitsgang beim Anwender des Zementes. Ein derartiger Zement stellt daher ein "ready-to-use"- Produkt dar, welches in grossen Mengen hergestellt werden kann. Es hat sich gezeigt, dass die Fähigkeit der Zusatzmittelzusammensetzung Z, das Abbinden von wässrigen, mineralischen Bindemittel zu Verzögern, durch den Mahlvorgang nicht beeinträchtigt wird.

Überraschenderweise hat sich weiter gezeigt, dass die Zugabe von Zusatzmittelzusammensetzung **Z** keinen negativen Einfluss auf die Effizienz des Mahlprozesses hat.

Überraschenderweise hat sich auch gezeigt, dass durch die Zugabe von Zusatzmittelzusammensetzung **Z** die Wirkung von Mahlhilfsmitteln beim Mahlprozess nicht beeinträchtigt wurde.

In einem weiteren Aspekt betrifft die vorliegende Erfindung die Verwendung einer Zusatzmittelzusammensetzung **Z**, wie sie vorgehend beschrieben wurde, zur Verzögerung des Abbindens eines wässrigen mineralischen Bindemittels, wobei das wässrige mineralische Bindemittel mit Zusatzmittelzusammensetzung **Z** gemahlenen Zementklinker umfasst, bei dessen Mahlen zu Zement die Zusatzmittelzusammensetzung **Z** anwesend war. Bei den mineralischen Bindemitteln handelt es sich um mineralische Bindemittel, wie sie vorgehend beschrieben wurden.

### Beispiele

Die Erfindung wird nun anhand von Beispielen näher erläutert.

### Verwendete Zusätze

| **Name** | **Hersteller** |
|---|---|
| Triisopropanolamin (**TIPA)** | BASF SE, Deutschland |
| Diethylenglykol **(DEG)** | Hansa Chemie AG, Schweiz |
| Kammpolymer, mit über Estergruppen an Polymergerüst gebundenen Seitenketten **(PCE),** Sika ViscoCrete®-20 HE | Sika Schweiz AG, Schweiz |
| Triethanolamin **(TEA)** | BASF SE, Deutschland |
| Essigsäure | Brenntag, Schweiz |
| **(VZ1)**, Aminophosphonsäure | Zschimmer und Schwarz GmbH, Deutschland |
| **(VZ2),** Gluconat | Jungbunzlauer AG, Schweiz |
| **(VZ3)**, Borsäure | Merck, Deutschland |

Die Zusatzmittel V1 bis V4 (Vergleichsbeispiele) und Z1 bis Z4 (erfindungsgemässe Beispiele) wurden im Mahlprozess eingesetzt.

Die Zusatzmittel wurden entsprechend den Mengen in Tabelle 2, respektive Tabelle 6, dem zu mahlenden Zementklinker kurz von dem Mahlen zugeben.

| | V1 | V2 | V3 | V4 | Z1 | Z2 | Z3 | Z4 |
|---|---|---|---|---|---|---|---|---|
| **PCE** | 20 | | 20 | | 20 | 30 | 20 | 20 |
| **DEG** | 20 | | | | 20 | 25 | 20 | 25 |
| **TEA** | | 8 | | 8 | | | | |
| **TIPA** | | 38 | 26 | 38 | | | | |
| Essigsäure | 2 | | 7 | | 2 | 4 | 2 | 4 |
| **VZ1** | | | 42 | 54 | | | | |
| **VZ2** | | | | | | | 15 | 15 |
| **VZ3** | | | | | 3 | 3 | | |
| K-Na-Cumolsulfonat | | | 5 | | | | | |
| Wasser | 58 | 54 | 0 | 0 | 55 | 38 | 43 | 36 |
| Summe | 100 | 100 | 100 | 100 | 100 | 100 | 100 | 100 |

Tabelle 1 Menge in Gew.-% bezieht sich auf die Zusatzmittelzusammensetzungen, respektive die Vergleichsbeispiele.

### Verwendeter Zementklinker

Der verwendete Zementklinker bestand zu 60% aus C3S, zu 20% aus C2S, zu 10 % aus C3A und zu 10% aus C4AF.

### Mahlen des Zementklinkers

20 kg einer Mischung des jeweiligen Zementklinkers und einem der jeweiligen Zusatzmittel, beziehungsweise ohne Zusatzmittel, wurden in der in Tabelle 2 angegebenen Dosierung vermengt und in einer Trommelkugelmühle der Firma Siebtechnik bei einer Temperatur von 100°C, bei einer Rotationsgeschwindigkeit von 40 Umdrehungen pro Minute, gemahlen.

### Prüfmethoden

- Mahldauer₄ₒₒₒ : Es wurde die Zeit bestimmt, bis die Mischung nach einem Mahlen in der Kugelmühle eine Blaine-Feinheit nach DIN EN 196-6 von 4000 cm²/g aufwies.
- Feinheit: Die Feinheit wurde nach Blaine mittels Blaine Automat der Firma Wasag Chemie bestimmt.

Die Resultate sind in Tabelle 2 ersichtlich.

**Tabelle 2 *Menge in Gew.-% bezieht sich auf das Gewicht des zu mahlenden Klinkers.**

| | Menge Zusatzmittel (Gew.-%*) | Mahldauer (min) |
|---|---|---|
| kein Zusatz | - | 75 |
| V1 | 0,05 | 68 |
| Z2 | 0,05 | 68 |
| Z3 | 0,05 | 65 |

Aus Tabelle 2 ist ersichtlich, dass die Anwesenheit von Verzögerer die Mahleffizienzsteigerung des Mahlhilfsmittels nicht negativ beeinflusst. Im Fall von Z3 wurde sogar eine überraschende Mahleffizienzsteigerung festgestellt.

Weiter wurde die Druckfestigkeit von einem Mörtel enthaltend einen so gemahlenen Zement bestimmt.

| Zusammensetzung der Mörtelmischung: Menge Normmörtel nach EN 196-1 | in g Menge ing |
|---|---|
| Zement, erhalten in den obenstehenden Mahlversuchen | 450 |
| Leitungswasser | 225 |
| Normsand 0-4 mm | 1350 |

Als Zement wurde der in den obenstehenden Mahlversuchen erhaltene Zement verwendet. Er hatte eine Feinheit nach Blaine (EN 196-6) von ca. 4000 cm²/g

Der Mörtel wurde nach EN 196-1 hergestellt und in die Formen eingebracht und verdichtet. Von den erhaltenen Mörtelmischungen wurde die Druckfestigkeit gemessen (siehe Tabelle 3). Die Prüfung zur Bestimmung der Druckfestigkeit (in N/mm²) an Prismen (40 x 40 x 160 mm) nach 1 Tag und 2 Tagen erfolgte nach EN 196-1.

**Tabelle 3: Druckfestigkeiten in N/mm² nach 1 Tag und 2 Tagen (d).**

| **Zusatz** | **Druckfestigkeit** | |
|---|---|---|
| | Nach 1 d (N/mm²) | Nach 2 d (N/mm²) |
| kein Zusatz | 14.2 | 25.1 |
| Z1 | 15.2 | 25.7 |
| Z2 | 14.5 | 26.4 |
| Z3 | 14.3 | n.a. |

Aus Tabelle 3 ist ersichtlich, dass die erfindungsgemässen Zusatzmittelzusammensetzungen zu einer leichten Erhöhung der Druckfestigkeit nach 1 Tag, respektive 2 Tagen, führen. Dies zeigt, dass der Verzögerer seine verzögernde Wirkung im Laufe des Mahlprozesses nicht verliert.

Ferner wurde bei dem vorgehend beschriebenen Mörtel das Ausbreitmass gemäss EN 196-3 nach 5 Minuten, 30 Minuten und 60 Minuten gemessen.

**Tabelle 4: Ausbreitmass in mm nach 5 min, 30 min und 60 min.**

| **Zusatz** | **Ausbreitmass (mm)** | | |
|---|---|---|---|
| | Nach 5 min | Nach 30 min | Nach 60 min |
| kein Zusatz | 189 | 176 | 169 |
| V1 | 191 | 176 | 168 (- 1 %) |
| Z1 | 191 | 176 | 170 |
| Z2 | 191 | 176 | 169 |
| V4 | 187 (- 1 %) | 169 (- 4%) | 163 (- 4%) |

Aus Tabelle 4 ist ersichtlich, dass die erfindungsgemässen Zusatzmittelzusammensetzungen zu den gemessenen Zeitpunkten Ausbreitmasse aufweisen, welche den Messungen der Mörtelzusammensetzung ohne Zusatz entsprechen. Das Vergleichsbeispiel V4, welches **TIPA** und **TEA**, organische Amine mit einem Molekulargewicht M_{w} kleiner als 500 g/mol, als Mahlhilfmittel aufweist, zeigt dagegen trotz Vorhandensein von Verzögerer bereits nach 30 Minuten ein verringertes Ausbreitmass.

Ferner wurden V2, V3 und Z4 in einem Zementwerk mit einer Kugelmühle mit Sichter für die Mahlung von Klinker eingesetzt, aus den erhaltenen Zementen Betonmischungen hergestellt und davon das Ausbreitmass gemäss EN 12350-5 nach 3 Minuten, 8 Minuten, 15 Minuten, 30 Minuten, 45 Minuten und 60 Minuten gemessen.

**Tabelle 5: Ausbreitmass in mm nach 3 min, 8 min, 15 min, 30 min, 45 min und 60 min.**

| **Zusatzmittel** | **Ausbreitmass (mm)** | | | | | |
|---|---|---|---|---|---|---|
| | Nach 3 min | Nach 8 min | Nach 15 min | Nach 30 min | Nach 45 min | Nach 60 min |
| V2 | 380 | 520 | 500 | 460 | 430 | 410 |
| V3 | 400 | 520 | 500 | 440 | 410 | 410 |
| Z4 | 380 | 530 | 500 | 470 | 460 | 450 |

Aus Tabelle 5 ist ersichtlich, dass bei Verwendung einer erfindungsgemässen Zusatzmittelzusammensetzung die Verzögerung des Ansteifens länger anhält als bei Verwendung von organischen Aminen als Mahlhilfsmitteln (V2) oder organischen Aminen als Mahlhilfsmitteln in Kombination mit Verzögerern (V3).

Ferner wurde das Braunverfärbungspotential von V1 - V4 sowie Z1 - Z3 in Anlehnung an das Braunverfärbungstestverfahren (HTC-Verfahren) geprüft, welches beschrieben ist in "Verringerung des Braunverfärbungsrisikos von Betonwaren" (Härdtl et al, BFT Betonwerk + Fertigteil-Technik, Nr.11, 2003, Seiten 34 - 46, Bauverlag).

Es wurde eine Mörtelmischung gemäss der untenstehenden Tabelle erstellt:

| Zusammensetzung der Mörtelmischung: | Menge in g |
|---|---|
| Zement | 259 |
| Leitungswasser | 192 |
| Normsand 0-4 mm | 1350 |
| Schaumbildner | 0.13 |

Der Zement wurde in einer Trommelkugelmühle der Firma Siebtechnik, gemäss dem vorhergehend beschriebenen Verfahren, unter Zugabe der in Tabelle 6 angegebenen Zusatzmittel, aus Zementklinker (60% C3S, 20% C2S, 10 % C3A, 10% C4AF) bis zu einer Feinheit nach Blaine (EN 196-6) von ca. 4000 cm²/g gemahlen.

Der Mörtel wurde nach EN 196-1 hergestellt, mit einem Schaumbildner versehen, damit ein Polybag PE-Druckverschlussbeutel befüllt und zu ca. 0.5 cm dicken Platten geformt. Dieser wurde verschlossen und 7 Tage bei 20°C / 65% relative Luftfeuchtigkeit gelagert. Die Zugabe eines Schaumbildners bewirkt einen leicht verarbeitbaren Mörtel, der trotz eines hohen w/z-Wertes nicht zur Abgabe von Wasser neigt. Durch die Zugabemenge an Schaumbildner wird sichergestellt, dass im Mörtel eine vergleichbare Porosität vorhanden ist.

Danach wurde der Polybag PE-Druckverschlussbeutel an 2 Stellen mit einem 10 mm langen Einschnitt versehen. Das im Mörtel vorhandene Wasser kann durch diese Einschnitte verdunsten und dort zu einer Ausblühung führen. Die Farbe der Ausblühung variiert von "Weiß" über "Gelb" bis zu einem kräftigen "Braun". Danach wurden die Probekörper 28 Tagen bei 20°C / 65% relative Luftfeuchtigkeit gelagert. Danach wurden bei den Probenkörpern die Ausblühungen mittels einer Farbmessung quantitativ beurteilt.

Die Resultate sind in Tabelle 6 ersichtlich.

**Tabelle 6 Δb-Werte und Braunverfärbung, Gew.-% bezieht sich auf das Gewicht des zu mahlenden Klinkers.**

| | Menge Zusatz (Gew.-%) | Δb-Wert | Braunverfärbung |
|---|---|---|---|
| kein Zusatz | - | 0.64 | - |
| V1 | 0,05 | 0.58 | - |
| V2 | 0,05 | 1.08 | ++ |
| V3 | 0,05 | 0.97 | + |
| V4 | 0,05 | 1.28 | ++ |
| Z1 | 0,05 | 0.62 | - |
| Z2 | 0,05 | 0.58 | - |
| Z3 | 0,05 | 0.63 | - |

Die Braunverfärbung der Probenkörper wurde aufgrund der folgenden Beurteilungsskala bewertet:
- gering, Δb-Wert <0.7
+ deutliche, Δb-Wert 0.7 - 1.0
++ stark, Δb-Wert >1.0

Aus Tabelle 6 ist ersichtlich, dass bei Verwendung von erfindungsgemässer Zusatzmittelzusammensetzung die Probenkörper eine bedeutend geringere Braunverfärbung aufweisen als bei Verwendung von Mahlhilfsmitteln, welche organische Amine mit einem Molekulargewicht M_{w} kleiner als 500 g/mol aufweisen.

## Patentansprüche

1. Zusatzmittelzusammensetzung **Z** umfassend:
mindestens ein Mahlhilfsmittel ausgewählt aus der Gruppe bestehend aus Glykole, Monocarbonsäuren mit 1 bis 4 Kohlenstoffatomen und Kammpolymere; sowie mindestens einen Verzögerer, wobei die Zusatzmittelzusammensetzung **Z** im Wesentlichen frei von organischen Aminen mit einem Molekulargewicht M_{w} von kleiner als 500 g/mol, respektive deren Ammoniumsalzen, ist.

2. Zusatzmittelzusammensetzung **Z** gemäss Anspruch 1, **dadurch gekennzeichnet, dass** das es sich bei dem Glykolen um Diglykole, insbesondere Diethylenglykol, handelt.

3. Zusatzmittelzusammensetzung **Z** gemäss Anspruch 1 oder 2, **dadurch gekennzeichnet, dass** das es sich bei den Monocarbonsäuren mit 1 bis 4 Kohlenstoffatomen um Essigsäure handelt.

4. Zusatzmittelzusammensetzung **Z** gemäss einem der vorhergehenden Ansprüche, **dadurch gekennzeichnet, dass** das es sich bei dem Kammpolymer um ein Kammpolymer **KP** mit über Estergruppen an das lineare Polymergerüst gebundenen Seitenketten handelt.

5. Zusatzmittelzusammensetzung **Z** gemäss einem der vorhergehenden Ansprüche, **dadurch gekennzeichnet, dass** der mindestens eine Verzögerer ausgewählt ist aus der Gruppe bestehend aus Celluloseether, Casein, Dextrin, Zink, Blei, Phosphate, Phosphonate, Silikonfluoride, Borsäure, Oxalsäure, Milchsäure, Succinsäure, Adipinsäure, Weinsäure, Gluconsäure, Heptonsäure, Zitronensäure, Gallussäure, Äpfelsäure, Saccharose, Glucose, und Fructose, respektive der Salze der erwähnten Säuren, insbesondere ausgewählt aus der Gruppe bestehend aus Borsäure, Gluconsäure, Saccharose, Glucose und Fructose, respektive der Salze der erwähnten Säuren.

6. Zusatzmittelzusammensetzung **Z** gemäss einem der vorhergehenden Ansprüche, **dadurch gekennzeichnet, dass** der Gewichtsanteil an Verzögerers 0.2 - 30 Gewichts-%, bezogen auf das Gewicht der Zusatzmittelzusammensetzung **Z**, beträgt.

7. Zusatzmittelzusammensetzung **Z** gemäss einem der vorhergehenden Ansprüche, **dadurch gekennzeichnet, dass** der Gewichtsanteil an Mahlhilfsmittels 0.2 - 99.8 Gewichts-%, bezogen auf das Gewicht der Zusatzmittelzusammensetzung **Z**, beträgt.

8. Verfahren zur Herstellung von mineralischen Bindemitteln umfassend den Schritt:
a) Zugabe einer Zusatzmittelzusammensetzung **Z** gemäss einem der Ansprüche 1 - 7 vor und/oder während dem Mahlvorgang von Zementklinker, welcher im mineralischen Bindemittel enthalten ist, wobei der Anteil an Zusatzmittelzusammensetzung **Z** 0.005 - 0.5 Gew.- %, bevorzugt 0.01 - 0.2 Gewichts-%, insbesondere bevorzugt zwischen 0.025 - 0.1 Gewichts-%, bezogen auf den zu mahlenden Zementklinker, beträgt.

9. Verwendung einer Zusatzmittelzusammensetzung **Z** gemäss Anspruch 1
- 7 zur Verzögerung des Abbindens eines wässrigen mineralischen Bindemittels, wobei das wässrige mineralische Bindemittel mit Zusatzmittelzusammensetzung **Z** gemahlenen Zementklinker umfasst, bei dessen Mahlen zu Zement die Zusatzmittelzusammensetzung **Z** anwesend war.
